# EUROPÄISCHE PATENTSCHRIFT

(11) **EP 1 293 374 B1**
(45) Veröffentlichungstag und Bekanntmachung des Hinweises auf die Patenterteilung: **07.04.2004**
(21) Anmeldenummer: 02016720.1
(22) Anmeldetag: 26.07.2002
(51) Int. Cl.: B60K 15/05

(54) **Tankverschluss für ein Kraftfahrzeug**
Tank closure for motor vehicle
Fermeture de réservoir pour véhicule à moteur

(30) Priorität: 14.09.2001 DE 10145531
(43) Veröffentlichungstag der Anmeldung: 19.03.2003
(73) Patentinhaber: AUDI AG, 85045 Ingolstadt (DE)
(72) Erfinder: Rückheim, Winfried, 85080 Gaimersheim (DE); Lamberty, Frank, 85051 Ingolstadt (DE); Fritze, Fabian Y., 22301 Hamburg/Winterhude (DE)
(74) Vertreter: Asch, Konrad, Dipl.-Ing.

(56) Entgegenhaltungen:
- DE-A- 4 436 600
- DE-B- 1 200 150
- FR-E- 50 011
- GB-A- 277 518
- GB-A- 2 149 447
- US-A- 5 072 986

## Beschreibung

Die Erfindung betrifft einen Tankverschluss für ein Kraftfahrzeug, mit einem in eine Karosserieöffnung des Kraftfahrzeuges mündenden Einfüllstutzen, gemäß dem Oberbegriff des Patentanspruches 1.

Tankverschlüsse für Kraftfahrzeuge weisen im allgemeinen schraubbare oder durch Bajonettverschluss gesicherte Tankdeckel auf und sind häufig hinter schwenkbaren Tankklappen der Karosserie-Außenhaut des Kraftfahrzeuges angeordnet.

In der GB 2 149 447 ist beispielsweise ein derartiger schwenkbare Tankklappe beschrieben, bei dem die Tankklappe durch eine seitlich abragende Halterung gehalten ist. Mit dem Tankklappe ist einstückig ein Tankdeckel ausgebildet. Die Schwenkachse der Tankklappe verläuft dabei neben dem Einfüllstutzen, wodurch der Tankdeckel in einer einfachen Drehbewegung gegen den Einfüllstutzen geführt ist und diesen abdichtet.

Durch die DE 195 35 335 C2 ist ferner ein Tankverschluss bekannt, bei dem ein Abschnitt des Einfüllstutzens über eine flexible Manschette verschwenkbar angeordnet und mit der Tankklappe gekoppelt ist. Beim Öffnen der Tankklappe wird der Einfüllstutzen-Abschnitt vom einem Dichtteil ähnlich einem Tankdeckel weg in eine Stellung geschwenkt, in der die Kraftstoff-Zapfpistole beim Betanken des Kraftfahrzeuges eingeschoben werden kann.

Aus der GB 277,518 ist ein Tankverschluss nach dem Oberbegriff des Anspruchs 1 bekannt, bei dem ein an einer Karosserieöffnung mündender Einfüllstutzen mittels eines Tankdeckels verschließbar ist. Der Tankdeckel ist über zumindest eine seitlich abragende Halterung über eine ortsfeste Schwenkachse zwischen einer den Einfüllstutzen freigebenden Stellung und einer den Einfüllstutzen verschließenden Stellung verschwenkbar.

Aufgabe der Erfindung ist es, einen Tankverschluss der gattungsgemäßen Art vorzuschlagen, der baulich einfacher und robuster ist und der besonders gut für eine Fernbedienung geeignet ist.

Diese Aufgabe wird erfindungsgemäß mit den kennzeichnenden Merkmalen des Patentanspruches 1 gelöst. Vorteilhafte Weiterbildungen der Erfindung sind den weiteren Patentansprüchen entnehmbar.

Erfindungsgemäß ist der Tankdeckel über zumindest eine seitlich abragende Halterung über eine ortfeste Schwenkachse zwischen einer den Einfüllstutzen freigebenden Stellung und einer den Einfüllstutzen verschließenden Stellung verschwenkbar, wobei die Schwenkachse im wesentlichen in einem definierten Abstand unterhalb der stirnseitigen Dichtflächen des Einfüllstutzens liegt. Der Tankdeckel wird somit ähnlich einem Riegel oder einem Schieber über den Einfüllstutzen geschwenkt, wobei bevorzugt unter Zwischenlage einer Dichtung der Einfüllstutzen dicht verschlossen wird. Die ortsfesten Aufnahmen für die Schwenklagerung des Tankdeckels können an entsprechenden Aufnahmen an der Karosserie des Kraftfahrzeuges, bevorzugt jedoch unmittelbar am Einfüllstutzen des betreffenden Kraftstofftanks, angeordnet sein. Letztere Anordnung hat den Vorteil, dass der Kraftstofftank mit dem Einfüllstutzen und dem Tankdeckel zu einer Baueinheit vormontiert und anschließend in das Kraftfahrzeug eingebaut werden kann.

Ferner ist der Tankdeckel senkrecht zur Schwenkachse betrachtet kreissegmentförmig mit einer konzentrisch zur Schwenkachse scheibenförmigen Außenkontur ausgebildet und in der geschlossenen Stellung unmittelbar die Karosserieöffnung abdeckt während in der geöffneten Stellung eine Ausnehmung im Tankdeckel den Einfüllstutzen freigibt. Aufgrund dieser Anordnung kann die eingangs genannte Tankklappe in der Außenhaut der Karosserie des Kraftfahrzeuges vollständig entfallen, in dem die Außenkontur des Tankdeckels ggf. ästhetisch und harmonisch eingefügt in die besagte Außenhaut gestaltet ist.

Insbesondere bei einer glattflächigen Gestaltung der Außenkontur des Tankdeckels kann dessen Betätigung dann über eine Fernbedienung elektrisch, pneumatisch oder mechanisch über eine Gestänge- oder eine Seilzugverbindung bewerkstelligt werden.

Insbesondere aufgrund der Merkmale der Ansprüche 3 und 4 wird zudem eine zuverlässige Abdichtung des Einfüllstutzens mit ausreichender Anpressung der Dichtung des Tankdeckels bei einer leichtgängigen Betätigung des Tankdeckels erzielt.

Ein Ausführungsbeispiel der Erfindung ist im folgenden mit weiteren Einzelheiten näher erläutert. Die schematische Zeichnung zeigt in
- Fig. 1: einen Schnitt entlang der Mittelachse des Einfüllstutzens durch den Tankverschluss mit dem schwenkbaren Tankdeckel in der Offenstellung; und
- Fig. 2: die gleiche Darstellung wie in Fig. 1, wobei der Tankdeckel in der geschlossenen Stellung gezeichnet ist.

Der dargestellte Tankverschluss 10 für einen nicht dargestellten Kraftstofftank für ein Kraftfahrzeug weist einen teilweise ersichtlichen, rohrförmigen Einfüllstutzen 12 und einen schwenkbaren Tankdeckel 14 auf.

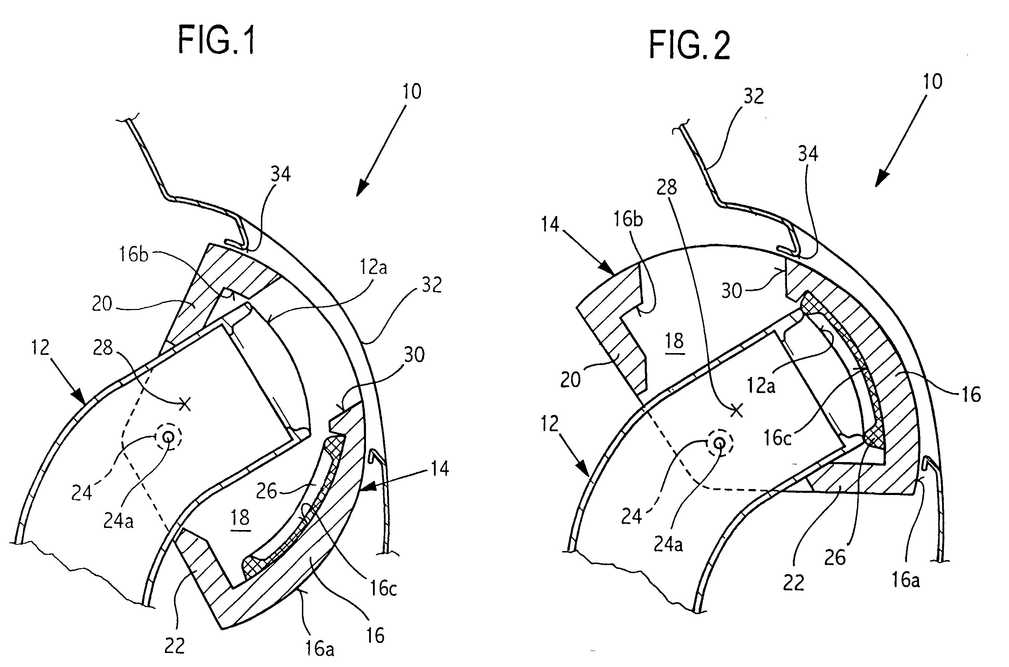

Der Tankdeckel 14 setzt sich aus einem kreisförmig gekrümmten Deckelteil 16, zwei seitlich davon wie die Schenkel eines U-abragende Halterungen bzw. Wände 18 (es ist in den Schnittzeichnungen Fig. 1 und 2 jeweils nur eine Wand 18 ersichtlich) und zwei nach Innen, dem Einfüllstutzen 12 zugerichtete Anschlagarme 20,22 zusammen.

Der Tankdeckel 14 ist über eine ortsfeste Schwenkachse 24a bzw. über Bolzen 24 (es ist wiederum nur der eine Bolzen 24 ersichtlich) schwenkbar gelagert, wobei die Bolzen 24 an nicht dargestellten Aufnahmevorsprüngen beiderseits des Einfüllstutzens 12 in diametraler Ausrichtung festgelegt sind und entsprechende Lagerbohrungen in den seitlichen Wänden 18 durchdringen. Die Schwenkachse 24a schneidet dabei etwa senkrecht die Längsmittelachse des Einfüllstutzens 12.

Die Außenkontur 16a des Deckelteils 16 ist kreisscheibenförmig bzw. walzenförmig gestaltet, wobei der korrespondierende Krümmungsmittelpunkt mit der Schwenkachse 24a identisch ist.

Gleiches gilt für die Innenkontur 16b des Deckelteils 16 mit Ausnahme des Bereiches 16c, auf dem z. B. durch Kleben die ringförmige Dichtung 26 befestigt ist. Dieser Bereich 16c weist einen Krümmungsmittelpunkt z. B. bei 28 auf, der in Verbindung mit der an diese "Schrägstellung" der Dichtung 26 angepasste Abrundung und Neigung der stirnseitigen Dichtfläche 12a des Einfüllstutzens 12 ein Abheben der Dichtung 26 beim Öffnen des Tankdeckels 14 und ein Anpressen der Dichtung 26 beim Schließen des Tankdeckels 14 bewirkt.

In das Deckelteil 16 ist ferner eine zumindest der lichten Weite des Einfüllstutzens 12 entsprechende Ausnehmung 30 eingearbeitet, über die der Einfüllstutzen 12 in der geöffneten Stellung des Tankdeckels 14 zum Betanken über eine Zapfpistole frei zugänglich ist.

Der Tankverschluss 10 ist unterhalb einer in der Karosserie-Außenhaut 32 des Kraftfahrzeuges vorgesehenen Öffnung 34 etwa kreisscheibenförmiger Konfiguration angeordnet, wobei die Außenkontur 16a des Tankdeckels 14 relativ nahe an die Öffnungsränder herangeführt ist (vgl. die Zeichnungen). Ggf. kann hier auch eine Dichtung eingefügt sein.

Der Tankdeckel 14 kann von der geöffneten Position (Fig. 1), in der die Ausnehmung 30 sich mit dem lichten Querschnitt des Einfüllstutzens 12 überdeckt, in die geschlossene Position (Fig. 2) geschwenkt werden, wobei die exakten Endstellungen durch die Anschlagarme 20,22 sichergestellt sind, die sich jeweils - wie ersichtlich - alternativ an die korrespondierenden Wandbereiche des Einfüllstutzens 12 anlegen.

In der geschlossenen Position ist aufgrund der "Desaxierung" der Dichtung 26 relativ zur Schwenkachse 24a und aufgrund der Abrundung und Neigung (Schrägstellung) der Dichtflächen 12a des Einfüllstutzens 12 eine zuverlässige Abdichtung bei ausreichenden Dichtungs-Anpresskräften sichergestellt.

Das Verschwenken des Tankdeckels 14 kann durch eine nicht dargestellte Fernbedienung, z. B. mittels eines Seilzuges oder bevorzugt durch Ansteuerung eines elektrischen Stellmotors, bewerkstelligt werden. Der Betätigungsgriff des Seilzuges oder der elektrische Schalter für den Stellmotor können am Armaturenbrett des Kraftfahrzeuges oder an einer anderen, gut zugänglichen Stelle innerhalb des Kraftfahrzeuges angeordnet sein.

Ferner kann z. B. mittels einer Übertotpunktfeder am Tankdeckel 14 oder durch Rastierungen sichergestellt sein, dass der Tankdeckel 14 stabil in der geöffneten und/oder geschlossenen Position gehalten ist.

Der Tankdeckel 14 ist bevorzugt aus Kunststoff oder einer Leichtmetalllegierung z. B. durch Spritzgießen oder im Druckgussverfahren hergestellt. Anstelle einer Ausnehmung 30 kann der Tankdeckel auch nur aus dem die Dichtung 26 tragenden Deckelteil 16 bzw. 16c gebildet sein.

## Patentansprüche

1. Tankverschluss für ein Kraftfahrzeug, mit einem an einer Karosserieöffnung mündenden Einfüllstutzen, der mittels eines Tankdeckels verschließbar ist, wobei der Tankdeckel (14) über zumindest eine seitlich abragende Halterung (18) über eine ortsfeste Schwenkachse (24a) zwischen einer den Einfüllstutzen (12) freigebenden Stellung und einer den Einfüllstutzen verschließenden Stellung verschwenkbar ist, wobei die Schwenkachse (24a) in einem definierten Abstand unterhalb der stirnseitigen Dichtflächen (12a) des Einfüllstützens (12) liegt, und die Schwenkachse (24a) des Tankdeckels (14) im wesentlichen senkrecht die Längsmittelachse des Einfüllstutzens (12) schneidet, **dadurch gekennzeichnet, dass** der Tankdeckel (14) mit konzentrisch zur Schwenkachse (24a) kreisscheibenförmiger Außenkontur (16a) ausgebildet ist und dass der Tankdeckel (14) in der geschlossenen Stellung unmittelbar die Karosserieöffnung (34) abdeckt.

2. Tankverschluss nach Anspruch 1, **dadurch gekennzeichnet, dass** die Außenkontur (16a) des Tankdeckels (14) in der geöffneten Stellung die Karosserieöffnung (34) teilweise abdeckt und dass eine Ausnehmung (30) im Tankdeckel (14) den Einfüllstutzen (12) freigibt.

3. Tankverschluss nach Anspruch 1 oder 2, **dadurch gekennzeichnet, dass** die die ringförmige Dichtung (26) des Tankdeckels (14) tragende Innenkontur (16b) ebenfalls im wesentlichen kreisscheibenförmig gestaltet ist, wobei zumindest der die ringförmige Dichtung (26) aufnehmende Bereich (16c) einen zur Schwenkachse (24a) versetzten ideellen Krümmungsmittelpunkt (28) aufweist.

4. Tankverschluss nach Anspruch 3, **dadurch gekennzeichnet, dass** die stirnseitige Dichtfläche (12a) des Einfüllstutzens (12) konform zur Konfiguration der ringförmigen Dichtung (26) in der Schließstellung des Tankdeckels (14) gekrümmt und geneigt ausgebildet ist.

5. Tankverschluss nach einem der vorhergehenden Ansprüche, **dadurch gekennzeichnet, dass** beiderseits des Einfüllstutzens (12) abragende Halterungen (18) des Tankdeckels (14) an ortsfesten Aufnahmen der Karosserie oder des Einfüllstutzens (12) gelagert sind.

6. Tankverschluss nach einem der vorhergehenden Ansprüche, **dadurch gekennzeichnet, dass** der Tankdeckel (14) von innerhalb der Karosserie des Kraftfahrzeuges durch Fernbedienung betätigbar ist.

7. Tankverschluss nach Anspruch 6, **dadurch gekennzeichnet, dass** der Tankdeckel (14) über einen Seilzug oder über einen elektrischen Stellmotor betätigbar ist.

## Claims

1. Tank closure for a motor vehicle, with a filler neck terminating at a body opening and closable by means of a tank lid, wherein the tank lid (14) is pivotable by at least one laterally downwards projecting bracket (18) [about] a fixed pivot axis (24a) between a position uncovering the filler neck (12) and a position closing the filler neck, the pivot axis (24a) is located at a defined distance below the end sealing faces (12a) of the filler neck (12), and the pivot axis (24a) of the tank lid (14) intersects the longitudinal centreline of the filler neck (12) substantially perpendicularly, **characterized in that** the tank lid (14) is configured with a circular disc[*sic*]-shaped outer contour (16a) concentric with the pivot axis (24a) and **in that** in the closed position, the tank lid (14) directly covers the body opening (34).

2. Tank closure according to Claim 1, **characterized in that** the outer contour (16a) of the tank lid (14) when in the open position partly covers the body opening (34) and **in that** an opening (30) in the tank lid (14) uncovers the filler neck (12).

3. Tank closure according to Claim 1 or Claim 2, **characterized in that** the inner contour (16b) carrying the ring-shaped seal (26) of the tanker lid (14) is likewise formed substantially as a circular disc [*sic*], at least the region (16c) which holds the ring-shaped seal (26) having an imaginary centre of curvature (28) that is offset from the pivot axis (24a).

4. Tank closure according to Claim 3, **characterized in that** the end sealing face (12a) of the filler neck (12) is curved and angled so as to conform to the configuration of the ring-shaped seal (26) in the closed position of the tank lid (14).

5. Tank closure according to any one of the preceding claims, **characterized in that** brackets (18) of the tank lid (14) projecting downwards on either side of the filler neck (12) are mounted on fixed bearings on the body or filler neck (12).

6. Tank closure according to any one of the preceding claims, **characterized in that** the tank lid (14) is remotely operable from inside the body of the motor vehicle.

7. Tank closure according to Claim 6, **characterized in that** the tank lid (14) is operable by cable or by an electric motor actuator.

## Revendications

1. Fermeture de réservoir pour un véhicule automobile, avec une tubulure de remplissage, débouchant sur une ouverture de carrosserie, tubulure susceptible d'être fermée, au moyen d'un couvercle de réservoir, le couvercle de réservoir (14) étant susceptible de pivoter par l'intermédiaire d'au moins une fixation (18) en porte-à-faux latéral, sur un axe de pivotement (24a) localement fixe, entre une position libérant la tubulure de remplissage (12) et une position fermant la tubulure de remplissage, l'axe de pivotement (24a), étant situé à une distance définie au-dessous des faces d'étanchéité frontales (12a) de la tubulure de remplissage (12) et l'axe de pivotement (24a) du couvercle de réservoir (14) coupant l'axe longitudinal médian de la tubulure de remplissage (12) de façon sensiblement perpendiculaire, **caractérisée en ce que** le couvercle de réservoir (14) est réalisé avec un contour extérieur (16a) en forme de disque circulaire, concentrique à l'axe de pivotement (24a), et **en ce que** le couvercle de réservoir (14) couvre directement l'ouverture de carrosserie (34) lorsqu'on se trouve à la position fermée.

2. Fermeture de réservoir selon la revendication 1, **caractérisée en ce que** le contour extérieur (16a) du couvercle de réservoir (14), à la position ouverte, couvre partiellement l'ouverture de carrosserie (34) et un évidement (30), ménagé dans le couvercle de réservoir (14) expose la tubulure d'introduction (12).

3. Fermeture de réservoir selon la revendication 1 ou 2, **caractérisée en ce que** le contour intérieur (16b), portant le joint d'étanchéité (26) à forme annulaire, du couvercle de réservoir (14) est également conformé sensiblement en disque circulaire, au moins la zone (16c) recevant le joint d'étanchéité (26) annulaire, présentant un centre de courbure (28) imaginaire, décalé par rapport à l'axe de pivotement (24a).

4. Fermeture de réservoir selon la revendication 3, **caractérisée en ce que** la face d'étanchéité (12a) frontale de la tubulure de remplissage (12) est incurvée et est inclinée de façon conforme à la configuration du joint d'étanchéité (26) annulaire, lorsque le couvercle de réservoir (14) est en position de fermeture.

5. Fermeture de réservoir selon l'une des revendications précédentes, **caractérisée en ce que** des fixations (18) en porte-à-faux de part et d'autre de la tubulure de remplissage (12), du couvercle de réservoir (14) sont montées sur des logements fixes, de la carrosserie ou de la tubulure de remplissage (12).

6. Fermeture de réservoir selon l'une des revendications précédentes, **caractérisée en ce que** le couvercle de réservoir (14) est actionnable par télécommande, depuis l'intérieur de la carrosserie du véhicule automobile.

7. Fermeture de réservoir selon la revendication 6, **caractérisée en ce que** le couvercle de réservoir (14) est actionnable par l'intermédiaire d'un câble de traction ou par l'intérieur d'un servomoteur électrique.
